# EUROPEAN PATENT SPECIFICATION

(11) **EP 2 072 425 B1**
(45) Date of publication and mention of the grant of the patent: **04.08.2010**
(21) Application number: 07425822.9
(22) Date of filing: 21.12.2007
(51) Int. Cl.: B65G 25/06

(54) **Moving floor for supporting and conveying loads**
Hin- und hergehender Flurförderer zum Tragen und Fördern von Lasten
Convoyeur de sol à mouvement alternatif pour supporter et transporter des charges

(43) Date of publication of application: 24.06.2009
(73) Proprietor: Officine Meccaniche Bovesane S.r.l., 12012 Boves (Cuneo) (IT)
(72) Inventor: Cavallo, Luciano, 12012 Boves (Cuneo) (IT)
(74) Representative: Marchitelli, Mauro

(56) References cited:
- DE-B- 1 296 087
- GB-A- 1 255 318
- US-A- 2 629 504
- US-A- 5 350 054

## Description

The present invention relates to a moving floor for supporting and conveying loads.

More precisely, the present invention relates to a moving floor of the type defined in the preamble of Claim 1. A moving floor of this type is known, for example, from the document EP-A-1698574. This document describes a moving floor for supporting and conveying loads, comprising two or more sets of movable slats, which move with alternating motion in their longitudinal direction. Said moving floors are used, for example, as floors of trailers and are used for handling bulk materials of various size or packaged loads of various types.

In the known solutions, such as, for example, in the case of the moving floor described in the document EP-A-1698574, the slats are controlled by an actuation device including a plurality of hydraulic cylinders. The actuation device of a hydraulic type entails the need to envisage a hydraulic assembly including a tank for hydraulic fluid, a pump, a control valve assembly, a plurality of hydraulic actuation cylinders associated to the sets of slats, and a series of sensors for detecting the position of the slats. A control device of this sort affects the cost of the moving floor considerably. In addition, the application of the moving floors of a known type to trailers drawn by vehicles without a complex auxiliary hydraulic circuit proves problematical.

The object of the present invention is to provide a moving floor that will enable the drawbacks of the known art to be overcome.

According to the present invention, this object is achieved by a moving floor presenting the characteristics forming the subject of Claim 1.

According to the present invention, the alternating motion of the slats, which brings about translation of the material set on the moving floor, is obtained by means of an actuation device comprising a crankshaft, which can turn about an axis transverse with respect to the direction of motion of the slats and is connected to the sets of slats by means of a plurality of connecting-rod and crank transmission mechanisms. The actuation device is provided in such a way as to obtain in a first step sliding of all the slats in a first direction and alternating return into the original position of the various sets of slats in three subsequent steps.

The moving floor according to the present invention is hence provided with a purely mechanical actuation system and requires the use of a hydraulic circuit only for uncoupling the motion of the floor from the power takeoff. The moving floor according to the present invention is decidedly less costly than the moving floors of a known type and can be used for trailers designed to be drawn by vehicles having a simple auxiliary hydraulic circuit.

A particularly advantageous field of use of the present invention is that of trailers for tractors for agricultural use designed for conveying and/or spreading bulk materials, such as, for example, manure, salt, etc. The present invention can also be advantageously used in fixed installations for conveying and dosing bulk materials.

The present invention will now be described in detail with reference to the attached drawings, which are provided purely by way of non-limiting example and in which:
- Figure 1 is a perspective view of a moving floor according to the present invention;
- Figure 2 is an exploded perspective view of the moving floor of Figure 1;
- Figure 3 is a perspective view of the moving floor of Figure 1 without the slats;
- Figure 4 is an exploded perspective view of the actuation device indicated by the arrow IV in Figure 3;
- Figure 5 is a perspective view at a larger scale of the part indicated by the arrow V in Figure 4;
- Figures 6 and 6A are views according to the arrow VI of Figure 5 which illustrate the device in different operating positions;
- Figures 7, 7A, 7B and 7C are views according to the arrow VII of Figure 5, which illustrate the actuation device in different operating positions;
- Figures 8 and 8A are views according to the arrow VIII of Figure 7 in different operating positions;
- Figure 9 is a view corresponding to Figure 6, illustrating the device in a different operating condition; and

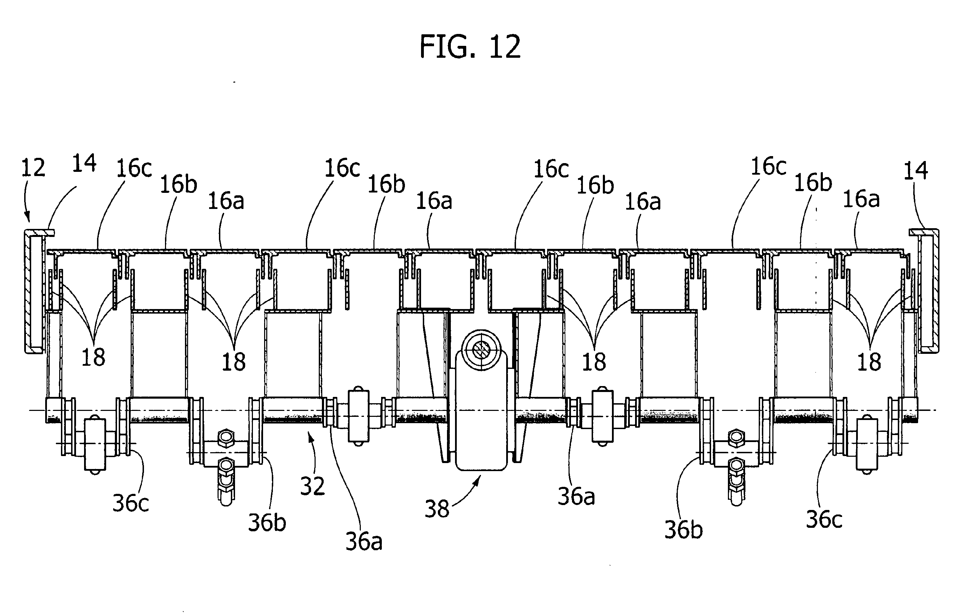

- Figures 10, 11 and 12 are sections respectively according to the lines X-X, XI-XI and XII-XII of Figure 3.

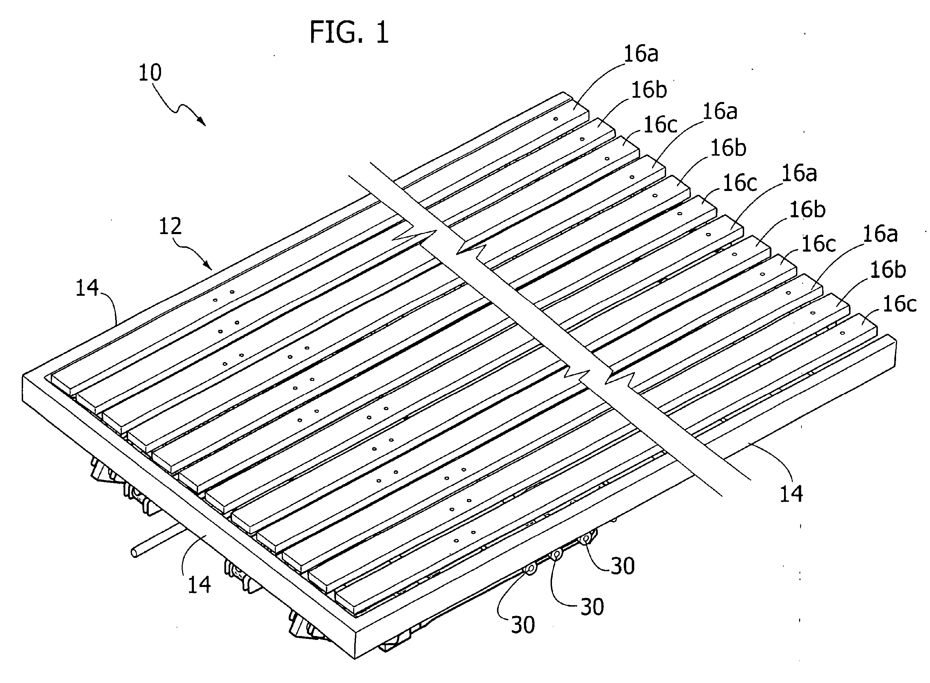

With reference to Figure 1, designated by 10 is a moving floor according to the present invention. The moving floor 10 comprises a stationary base structure 12 including a rectangular perimetral frame made up of sturdy metal beams 14.

The moving floor 10 comprises a plurality of slats 16 parallel to one another. The slats 16 are divided into three sets. The slats of the first set are designated by 16a, those of the second set by 16b, and those of the third set by 16c. The slats of the three sets 16a, 16b, 16c are arranged alternated to one another, in such a way that each slat is set between two slats belonging to different sets, with the exception of the two end slats, which are adjacent to a respective longitudinal beam 14 of the base structure 12. Each slat 16a, 16b, 16c is made up of a sectional element elongated in the longitudinal direction, preferably made of aluminium or its alloys. The slats 16a, 16b, 16c are arranged in strict vicinity with respect to one another, with freedom of relative sliding in a longitudinal direction.

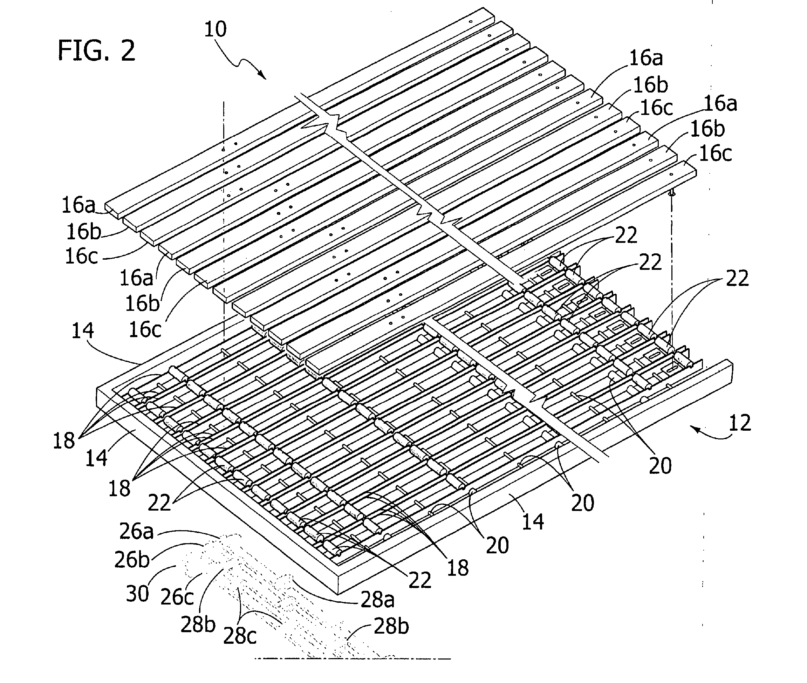

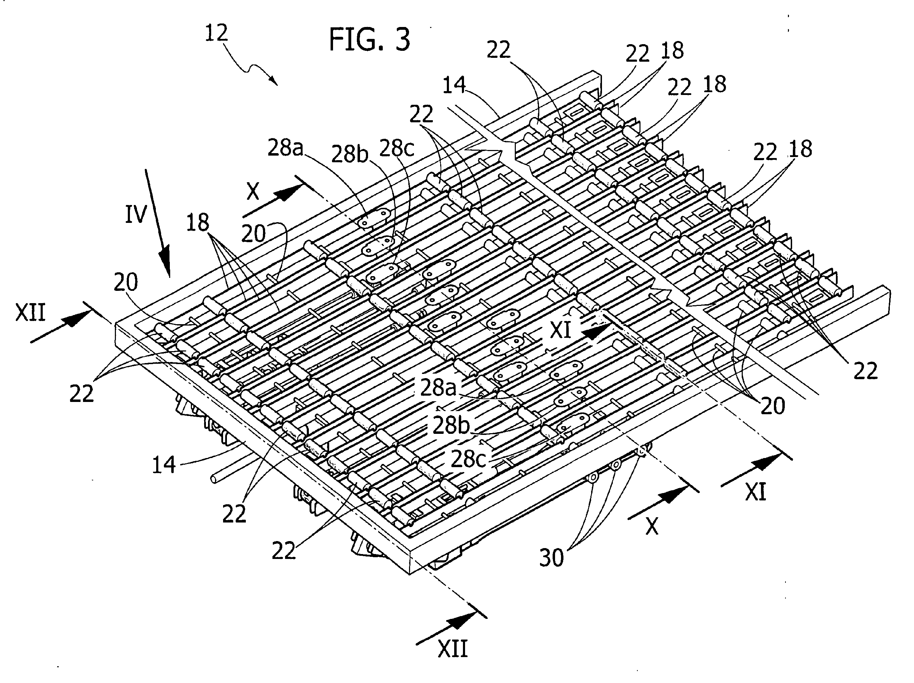

With reference to Figures 2 and 3, the base structure 12 comprises a plurality of rigid metal strips 18, set parallel to one another and extending in a longitudinal direction. Each strip 18 is contained in a vertical plane and is preferably made of steel plate. The strips 18 are set at a distance from one another in the transverse direction and are fixed to one another and to the perimetral frame 14 by means of transverse rods 20.

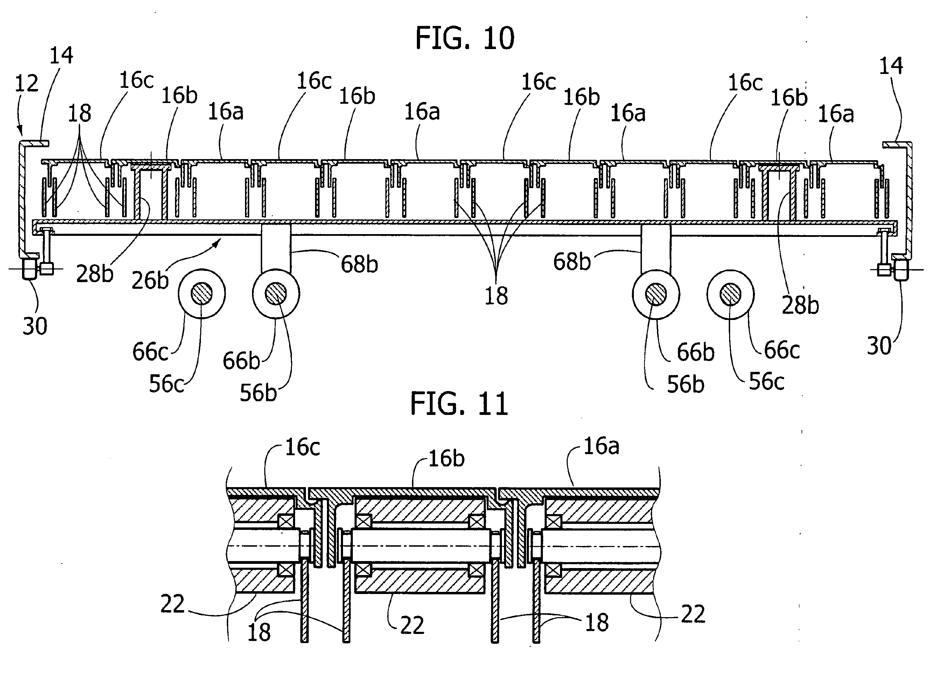

The strips 18 carry a plurality of idler rollers 22, mounted in a freely rotatable way about respective horizontal transverse axes. The rollers 22 form a plurality of longitudinal arrays adjacent to one another. Each longitudinal array of rollers 22 carries a respective slat 16a, 16b or 16c. The slats 16a, 16b, 16c rest on the rollers 22 as is illustrated in Figure 11 and are free to slide independently of one another in a longitudinal direction.

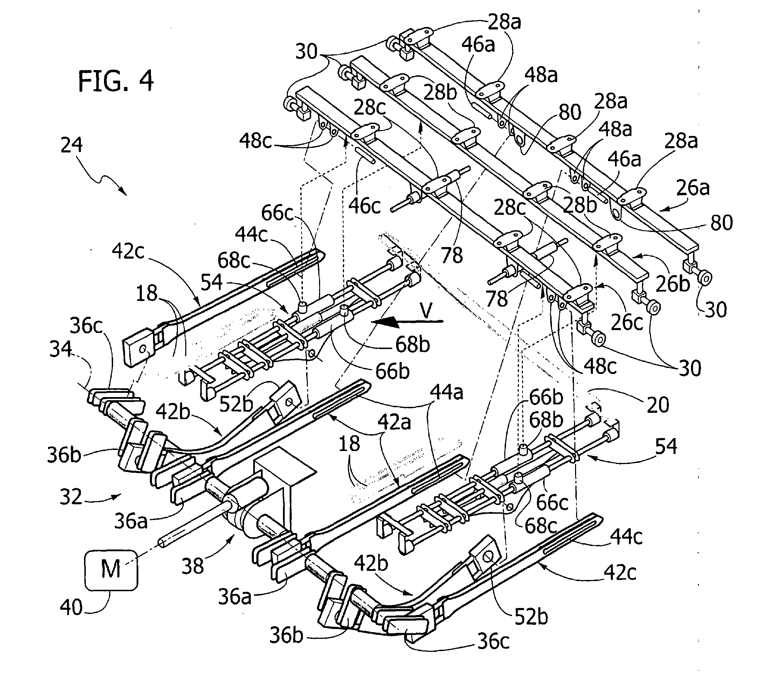

With reference to Figure 4, designated as a whole by 24 is an actuation device designed to control the motion in a longitudinal direction of the sets of slats 16a, 16b, 16c. The actuation device 24 comprises three mobile cross members 26a, 26b, 26c provided with respective connection portions 28a, 28b, 28c fixed to which are the slats 16a, 16b, 16c. The slats of the first set 16a are fixed to the cross member 26a, the slats of the second set 16b are fixed to the cross member 26b, and the slats of the third set 16c are fixed to the cross member 26c. Fixing of the slats 16a, 16b, 16c to the respective connection portions 28a, 28b, 28c is preferably obtained by means of screws (not illustrated). As may be seen in Figure 10, the cross members 26a, 26b, 26c are provided at their ends with idler rollers 30 with horizontal axis, which slidingly engage the bottom edge of the longitudinal beams 14 of the base structure 12.

With reference to Figure 4, the actuation device 24 comprises a crankshaft 32, which is able to turn about a transverse horizontal axis 34. The crankshaft 32 is carried in a rotatable way by the base structure 12 and comprises three pairs of cranks designated by 36a, 36b, and 36c. The crankshaft 32 is driven in rotation about the axis 34 by means of a reducer 38, which can be connected to a power takeoff 40.

The cranks 36a, 36b and 36c are connected to respective connecting rods 42a, 42b, 42c. Each of the connecting rods 42a and 42c is preferably formed by two parallel elongated plates and has a first end articulated to the respective crank 36a, 36c and a longitudinal groove 44a, 44c. The longitudinal groove 44a, 44c of each connecting rod 42a, 42c is slidably engaged by a respective pin 46a, 46c. Each pin 46a, 46c is carried by two flanges 48a, 48c fixed to respective cross members 26a, 26c.

Each connecting rod 42b is constituted by a sturdy arm, which is substantially bracket-shaped and has a first end articulated to the respective crank 36b and carries at the opposite end an articulation member 52b fixed with respect to the connecting rod 42b and provided with a transverse articulation hole.

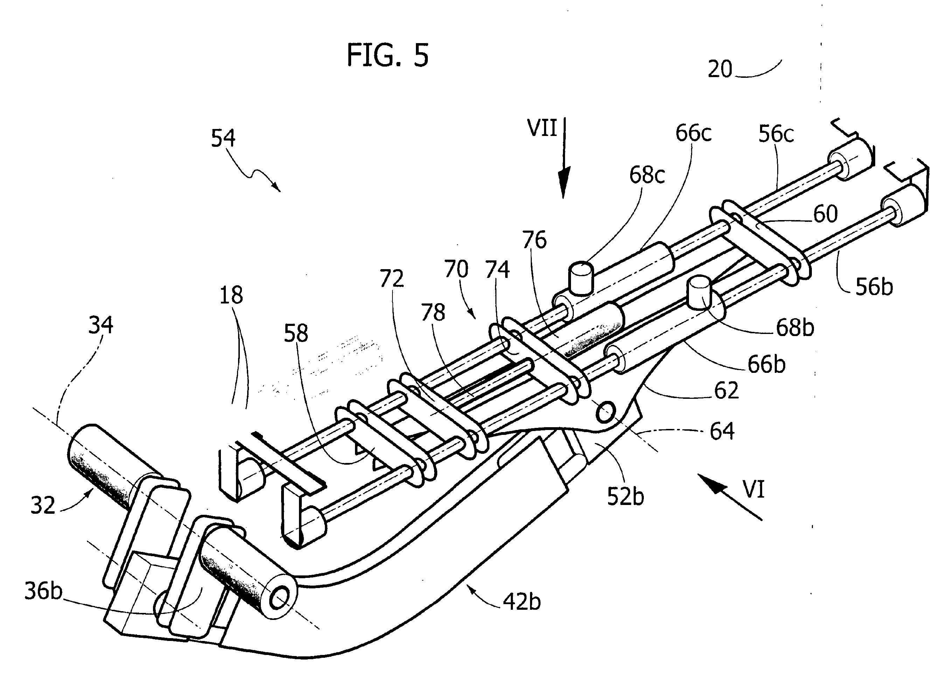

Each connecting rod 42b is associated to a respective transmission assembly 54. As is illustrated in greater detail in Figure 5, each transmission assembly 54 comprises two guide rods 56b, 56c set parallel to one another and extending in a longitudinal direction. The guide rods 56b, 56c are fixed with respect to the base structure 12. The guide rods 56b, 56c carry two thrust members 58, 60, which are free to slide in a longitudinal direction along the guide rods 56b, 56c. The two thrust members 58, 60 are both fixed to a longitudinal flange 62, which is articulated about a transverse axis 64 of the respective connecting rod 42b. The transmission assembly 54 comprises an elongated cylindrical bushing 66b mounted so that it can slide on the guide rod 56b and an elongated cylindrical bushing 66c mounted so that it can slide on the guide rod 56c. The two bushings 66b, 66c are free to slide on the respective guide rods 56b, 56c independently of one another. The cylindrical bushing 66b is fixed to the mobile cross member 26b via a connection member 68b. The cylindrical bushing 66c is fixed to the mobile cross member 26c via a connection member 68c.

Once again with reference to Figure 5, the transmission assembly 54 comprises a spacer with variable length 70 made up of two flanges 72, 74 and an actuator 76, preferably constituted by a hydraulic cylinder. The flanges 72, 74 slidably engage both of the guide rods 56b, 56c. The body of the hydraulic cylinder 76 is fixed to the flange 74, and the stem 78 of the cylinder is fixed to the flange 72. When the cylinder 76 is in the extended configuration illustrated in Figure 5, the spacer 70 is in the configuration of maximum extension. When the cylinder 76 is in the retracted position, the two flanges 72, 74 approach one another, and the spacer device 70 is in the configuration of minimum extension. The flanges 72, 74 of the spacer device 70 are set between the thrust member 58 and the cylindrical bushings 66b, 66c and said bushings are set between the thrust member 60 and the flange 74 of the spacer device 70.

With reference to Figure 4, the mobile cross member 26c carries two thrust elements 78 fixed with respect to the cross member 26c and extending in the longitudinal direction. The thrust elements 78 are designed to engage respective contrast elements 80 fixed with respect to the cross member 26a.

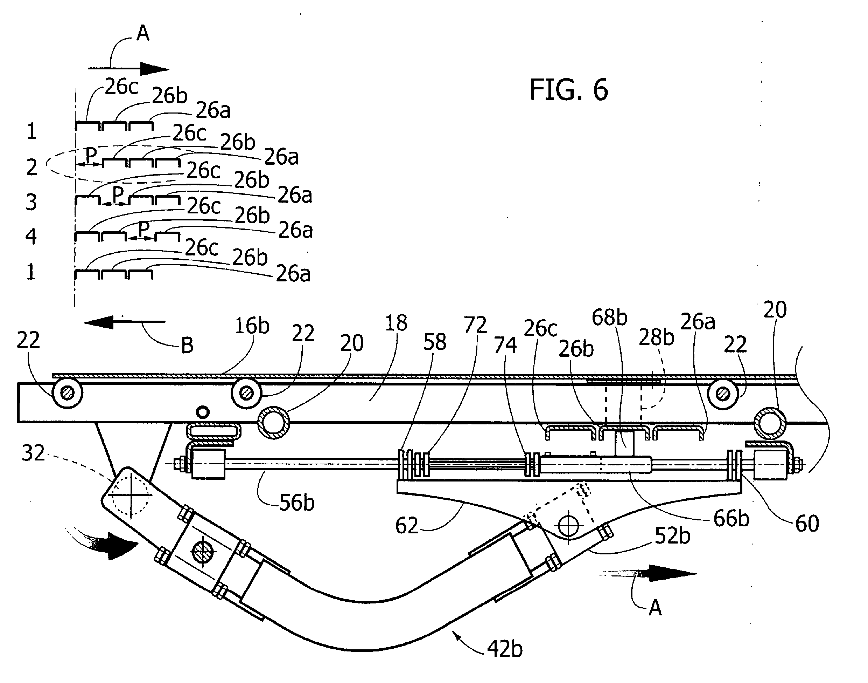

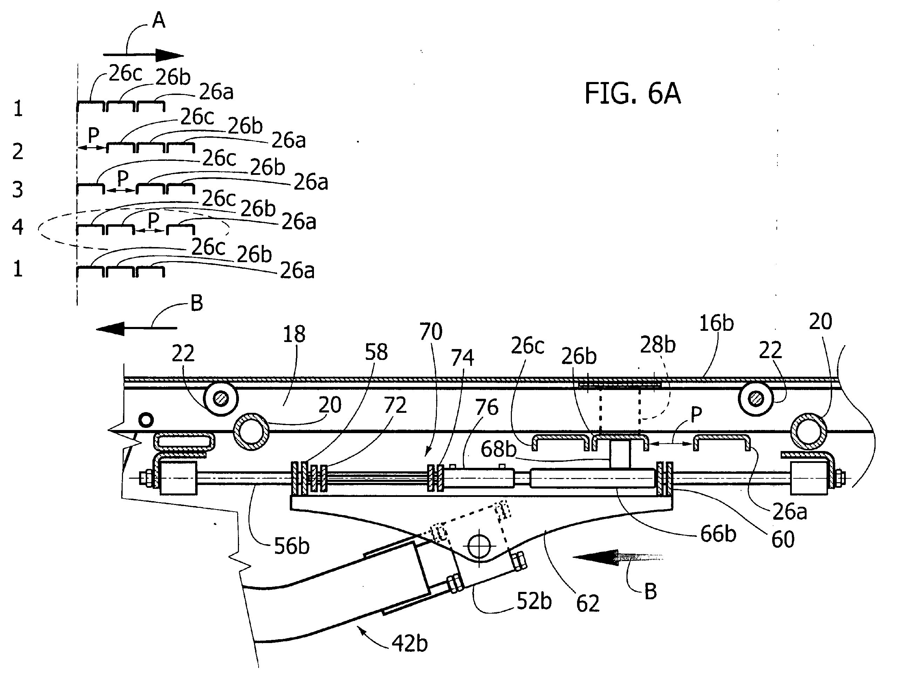

With reference to Figure 6, the actuation device controls a four-step operating cycle. Illustrated schematically in the left-hand part of Figure 6 is the position of the mobile cross members 26a, 26b, 26c in the four steps of the cycle. Given that fixed to each of said mobile cross members is one set of slats 16a 16b, 16c, the motion of the mobile cross members 26a 26b, 26c corresponds to a motion in the same direction and of the same amplitude of the respective sets of slats. In the configuration designated by 1, the three mobile cross members 26a 26b and 26c are set alongside one another and are in a retracted position. Starting from this condition, the first step of the operating cycle envisages simultaneous displacement of the three mobile cross members 26a 26b, 26c by one pitch P in a direction of advance indicated by the arrow A, into the position designated by 2. The second step of the cycle envisages displacing the mobile cross member 26c by one pitch P in the direction B opposite to the direction A, maintaining stationary the cross members 26a and 26b so as to reach the position designated by 3. Next, the cross member 26b is displaced by one pitch P in the direction B, whilst the cross members 26a and 26c are kept stationary, so as to reach the position designated by 4. Finally, the cross member 26a is displaced by one pitch P in the direction B so as to bring the device back into the initial configuration designated by 1. This cycle corresponds to a complete rotation through 360° of the crankshaft 32. At each rotation of the crankshaft 32 a complete cycle of motion of the mobile cross members 26a, 26b, 26c is repeated.

The dashed line in the diagrams of Figures 6, 6A, 7, 7A, 7B, 7C, 8, 8A, 8B, indicates the operating step in which the device illustrated in the respective figure is found.

With reference to Figures 6, 7 and 8, the first operating step (i.e., the one that brings the mobile cross members from the position 1 to the position 2) is controlled by the connecting-rod and crank mechanisms 36b and 42b. During this step, the other two connecting-rod and crank mechanisms 36a, 42a and 36c, 42c are uncoupled from the respective sets of slats. In this first step, the connecting rods 42b move the thrust members 58 by one pitch P in the direction A. The thrust members 58, via the spacers 70, push the cylindrical bushings 66b, 66c in the direction A. The cylindrical bushings 66b, 66c are fixed with respect to the mobile cross members 26b and 26c. Consequently, the cross members 26b and 26c are displaced by one pitch P in the direction A. In this step, the thrust members 78 of the mobile cross member 26c engage the contrast members 80 of the mobile cross member 26a and move the mobile cross member 26a by one pitch P in the direction A. Then, in this step the three mobile cross members 26a, 26b and 26c move simultaneously by one pitch P in the direction A.

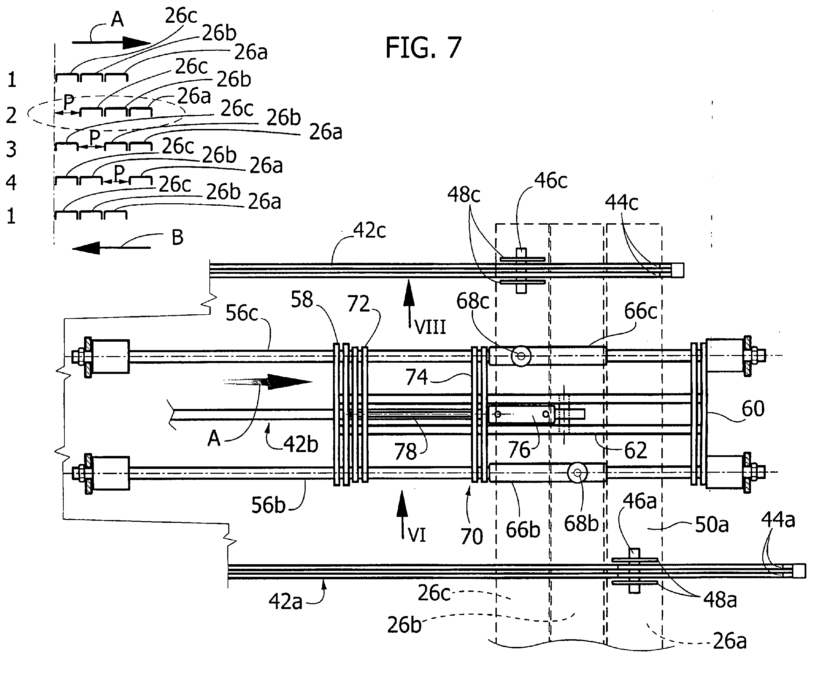

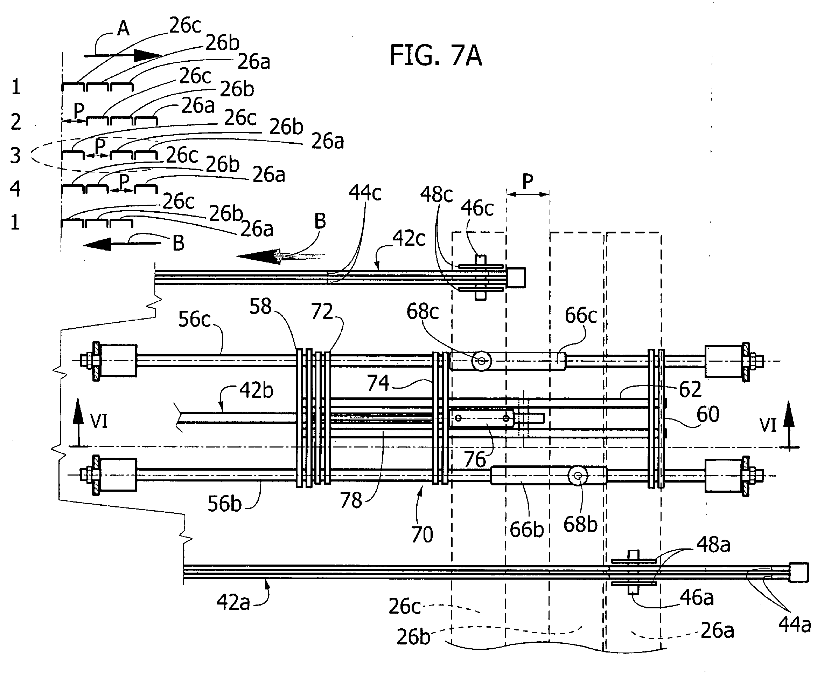

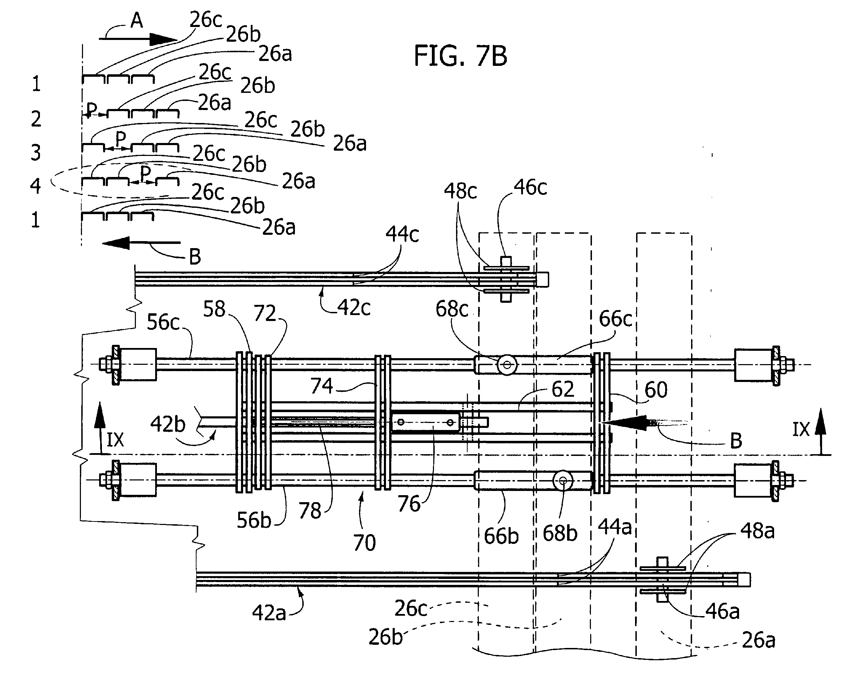

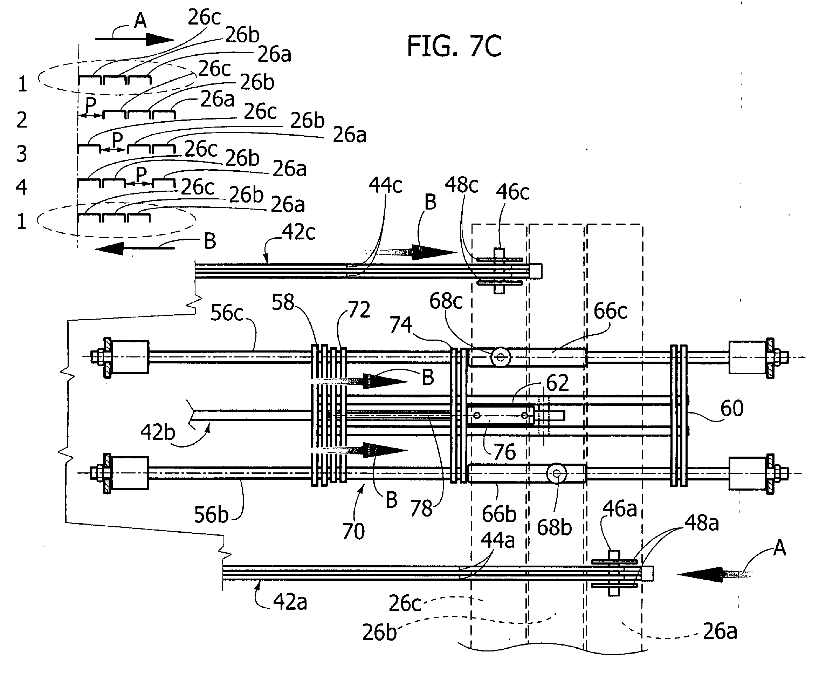

As may be seen in Figure 7, in this step the connecting rods 42a and 42c are disengaged from the respective cross members 26a and 26c and hence from the respective sets of slats 16a, 16c. In fact, the pins 46a, 46c slide freely in the respective grooves 44a, 44c and the motion of the connecting rods 42a, 42c does not transfer any motion to the cross members 26a, 26c.

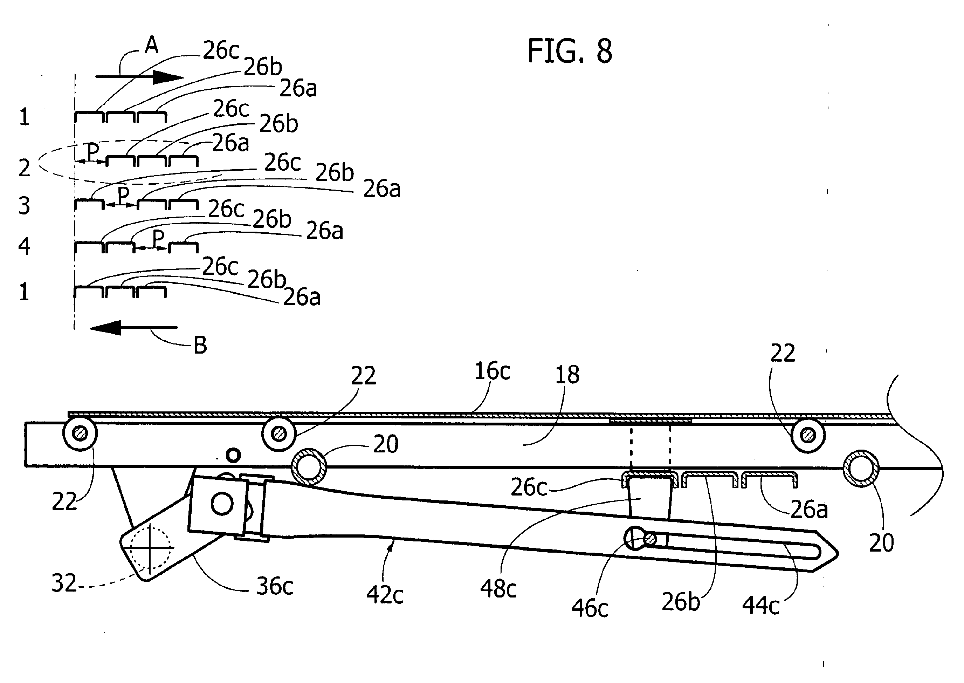

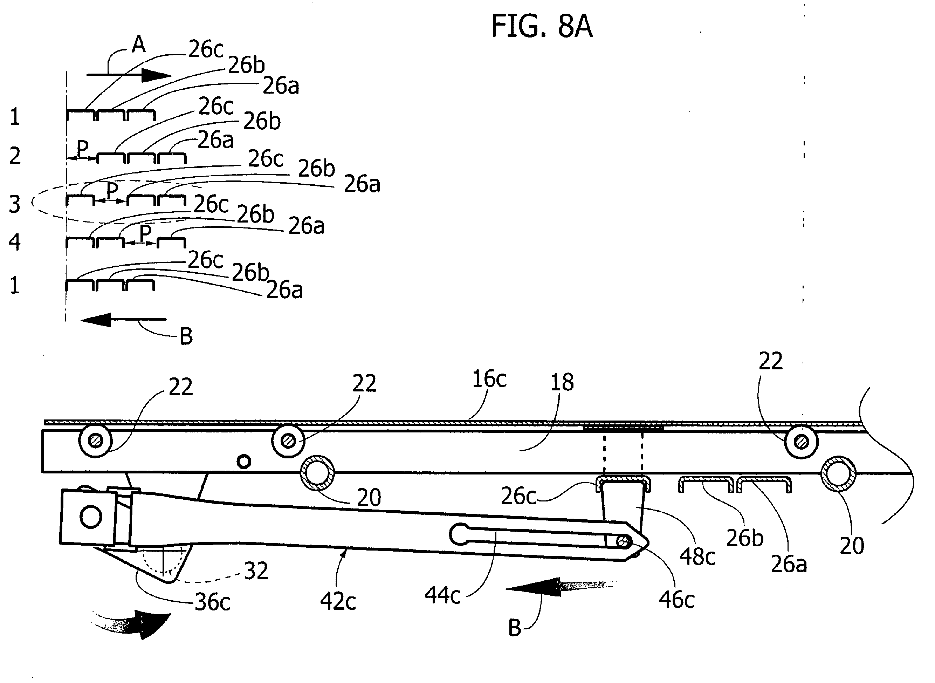

In the next step, illustrated in Figures 7A and 8A, the ends of the grooves 44c come into contact with the pins 46c. The connecting rods 42c displace the cross member 26c by one pitch P in the direction B. In this step, the connecting rods 42a and 42b are disengaged from the cross members 26a and 26b.

In the next step, illustrated in Figures 6A and 7B, the thrust element 60 comes into contact with the cylindrical bushing 66b and displaces said bushing and the cross member 26b associated thereto by one pitch in the direction B bringing the device into the position 4. In this step, the connecting rods 42a and 42c are disengaged from the respective cross members 26a and 26c.

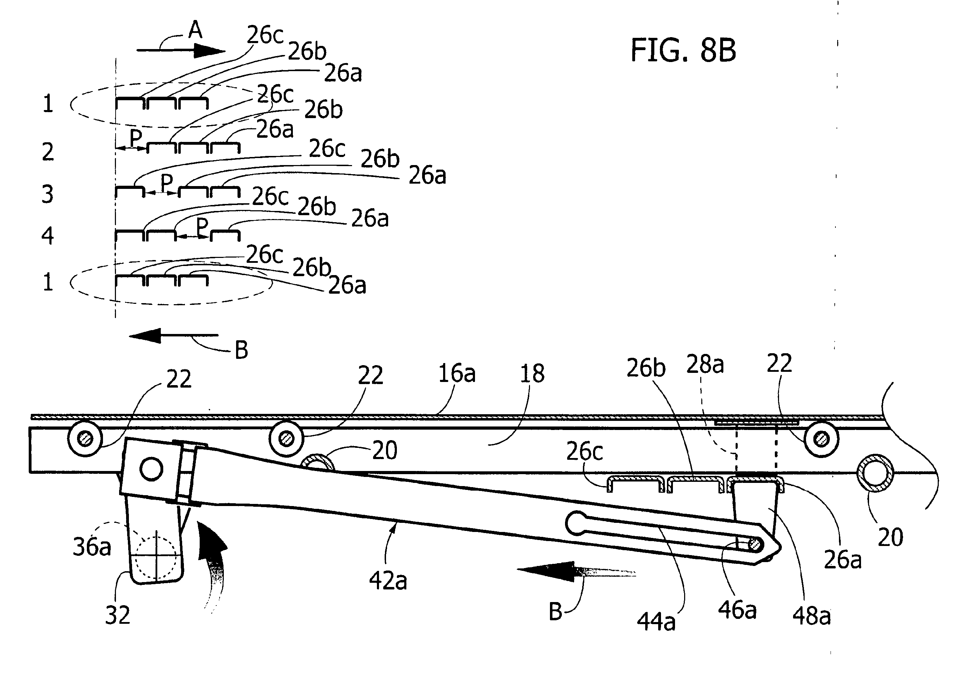

Then, in the step illustrated in Figures 7C and 8B, the ends of the grooves 44a come into contact with the pins 46a and draw the pins 46a and the cross member 26a associated thereto by one pitch in the direction B to bring the device into the position 1. In this step, the connecting rods 42b and 42c are released from the respective cross members 22b and 22c.

At this point, the cross members are in the initial position and a new cycle starts again. This cycle of movement enables step-by-step displacement of the load set on the slats 16a, 16b, 16c in the direction A.

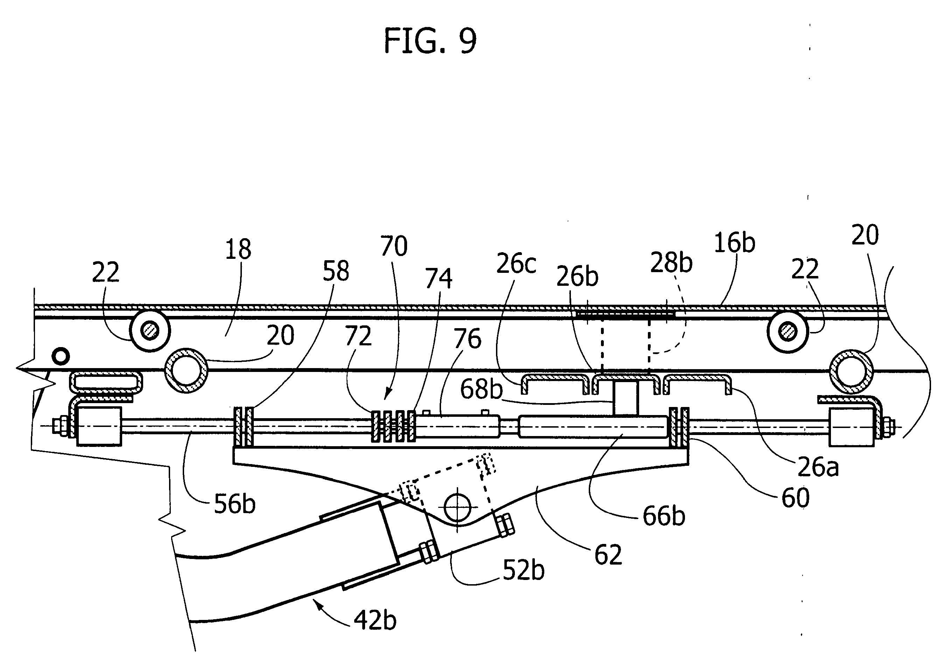

The spacers 70 with variable length of the transmission assemblies 54 enable the actuation device 24 to be set in a neutral position, in which the drive shaft 32 is disengaged from the mobile cross members 26a, 26b, 26c. As is illustrated in Figure 9, when the spacers 70 are in a contracted position, the thrust member 58 does not exert any action of thrust on the cylindrical bushings 66b, 66c. The mobile cross members 26a, 26b, 26c remain stationary in the position 1, whilst the crankshaft continues to rotate without transferring any motion to the slats 16a, 16b, 16c. This function is advantageous for interrupting temporarily the supply of the load without stopping the motor that actuates the crankshaft 32.

## Claims

1. Moving floor for supporting and conveying loads, comprising:
- a stationary base structure (12);
- a first set of slats (16a), a second set of slats (16b), and a third set of slats (16c), which are mobile in a longitudinal direction;
- an actuation device (24) for controlling a step-by-step alternating motion of said sets of slats (16a, 16b, 16c) according to a four-step operating cycle, in which in a first step the first, second, and third sets of slats (16a, 16b, 16c) move together by one pitch (P) in a first direction (A) and in which in the second, third, and fourth steps, one set of slats moves by one pitch (P) in a second direction (B) opposite to the first direction (A) whilst the remaining two sets of slats remain stationary,
**characterized in that** the actuation device (24) comprises a crankshaft (32), which can turn about an axis (34) transverse with respect to the direction of motion of said slats (16a, 16b, 16c) and is connected to said sets of slats (16a, 16b, 16c) by means of a plurality of connection-rod and crank transmission mechanisms (36a, 36b, 36c, 42a, 42b, 42c), in which each of said connection-rod and crank transmission mechanisms (36a, 36b, 36c, 42a, 42b, 42c) is disengaged from the respective set of slats (16a, 16b, 16c) for at least one part of said operating cycle.

2. Moving floor according to Claim 1, **characterized in that** each of said sets of slats (16a, 16b, 16c) is fixed to a respective mobile cross member (26a, 26b, 26c), said mobile cross members (26a, 26b, 26c) being coupled to said connection-rod and crank transmission mechanisms (36a, 36b, 36c, 42a, 42b, 42c) by means of respective elements (46a, 46c, 66b, 66c), which are able to slide in a longitudinal direction and co-operate with respective connecting rods (42a, 42b, 42c).

3. The moving floor according to Claim 2, **characterized in that** at least one of said connection-rod and crank transmission mechanisms (36a, 36c, 42a, 42c) comprises a connecting rod (42a, 42c) including an elongated groove (44a, 44c) in which a pin (46a, 46c) fixed to a respective sliding mobile cross member (26a, 26b, 26c) is able to slide.

4. Moving floor according to Claim 2, **characterized in that** at least one of said connection-rod and crank transmission mechanisms (36b, 42b) is connected to a respective mobile cross member (26b, 26c) by means of a transmission assembly (54) including two stationary rods (56b, 56c), slidably mounted on which independently of one another are two cylindrical bushings (66b, 66c) fixed to respective mobile cross members (26b, 26c), said cylindrical bushings (66b, 66c) co-operating with two thrust members (58, 60), which are able to slide on said rods (56b, 56c) and are fixed to a flange (62) articulated to said connecting rod (42b).

5. Moving floor according to Claim 4, **characterized in that** it comprises a spacer device (70) with variable length set between one of said thrust members (58, 60) and said cylindrical bushings (66b, 66c).

6. Moving floor according to Claim 1, **characterized in that** the aforesaid stationary base structure (12) comprises a plurality of strips of metal plate (18), set parallel to one another in a longitudinal direction and contained in respective vertical planes, said strips of metal plate carrying a plurality of idler rollers (22) with transverse axis, slidably mounted on which are said slats (16a, 16b, 16c).

## Patentansprüche

1. Schiebeboden zum Tragen und Fördern von Lasten, aufweisend:
- einen stationären Basisrahmen (12),
- einen ersten Satz Lamellen (16a), einen zweiten Satz Lamellen (16b), und einen dritten Satz Lamellen (16c), die in einer Längsrichtung beweglich sind,
- eine Antriebsvorrichtung (24) zum Steuern eines schrittweise Hin- und Herbewegens der Sätze von Lamellen (16a, 16b, 16c) gemäß einem vierstufigen Betriebszyklus, bei dem sich in einem ersten Schritt der erste, der zweite und der dritte Satz Lamellen (16a, 16b, 16c) zusammen um einen Abstand (P) in einer ersten Richtung (A) bewegen und bei dem sich in der ersten, in der zweiten und in der vierten Stufe ein Satz Lamellen um einen Abstand (P) in einer zweiten Richtung (B) entgegengesetzt zur ersten Richtung (A) bewegt während die verbleibenden beiden Sätze von Lamellen stationär bleiben,
**dadurch gekennzeichnet, dass**
die Antriebsvorrichtung (24) eine Kurbelwelle (32) aufweist, die sich um eine Achse (34) quer zur Bewegungsrichtung der Sätze von Lamellen (16a, 16b, 16c) drehen kann und mit den Sätzen von Lamellen (16a, 16b, 16c) durch mehrere Verbindungsstangen- und Kurbelübertragungsmechanismen (36a, 36b, 36c, 42a, 42b, 42c) verbunden ist, wobei jeder der Verbindungsstangen- und Kurbelübertragungsmechanismen (36a, 36b, 36c, 42a, 42b, 42c) von den jeweiligen Sätzen von Lamellen (16a, 16b, 16c) für wenigstens einen Teil des Betriebszyklus ausgerückt ist.

2. Schiebeboden nach Anspruch 1,
**dadurch gekennzeichnet, dass**
jeder der Sätze von Lamellen (16a, 16b, 16c) an einem jeweiligen bewegbaren Querstück (26a, 26b, 26c) befestigt ist, wobei die bewegbaren Querstücke (26a, 26b, 26c) mit den Verbindungsstangen- und Kurbelübertragungsmechanismen (36a, 36b, 36c, 42a, 42b, 42c) durch jeweilige Elemente (46a, 46c, 66b, 66c) gekoppelt sind, die in einer Längsrichtung gleiten können und mit jeweiligen Verbindungsstangen (42a, 42b, 42c) zusammenarbeiten können.

3. Schiebeboden nach Anspruch 2,
**dadurch gekennzeichnet, dass**
wenigstens einer der Verbindungsstangen- und Kurbelübertragungsmechanismen (36a, 36b, 36c, 42a, 42b, 42c) eine Verbindungsstange (42a, 42c) mit einer länglichen Nut (44a, 44c) aufweist, in welcher ein Stift (46a, 46c), der mit einem jeweiligen gleitbeweglichen Querstück (26a, 26b, 26c) verbunden ist, gleiten kann.

4. Schiebeboden nach Anspruch 2,
**dadurch gekennzeichnet, dass**
wenigstens einer der Verbindungsstangen- und Kurbelübertragungsmechanismen (36b, 42b) mit einem jeweiligen beweglichen Querstück (26b, 26c) mittels einer Übertragungsanordnung (54) verbunden ist, die zwei stationäre Stangen (56b, 56c) umfasst, an denen zwei zylindrische Buchsen (66b, 66c), die an jeweiligen beweglichen Querstücken (26b, 26c) befestigt sind, unabhängig voneinander gleitbeweglich befestigt sind, wobei die zylindrischen Buchsen (66b, 66c) mit zwei Schubelementen (58, 60) zusammenarbeiten, die an den Stangen (56b, 56c) gleiten können und an einem Flansch (62), der an der Verbindungsstange (42b) angelenkt ist, befestigt sind.

5. Schiebeboden nach Anspruch 4,
**dadurch gekennzeichnet, dass**
er eine Abstandsvorrichtung (70) mit veränderlicher Länge, die zwischen einem der Druckstücke (58, 60) und den zylindrischen Buchsen (66b, 66c) angeordnet ist, aufweist.

6. Schiebeboden nach Anspruch 1,
**dadurch gekennzeichnet, dass**
der zuvor angegebene stationäre Basisrahmen (12) mehrere Metallplattenstreifen (18) aufweist, die parallel zueinander in einer Längsrichtung angeordnet sind und sich in jeweiligen vertikalen Ebenen befinden, wobei die Metallplattenstreifen mehrere Leerlaufrollen (22) mit Querachsen tragen, an welchen die Lamellen (16a, 16b, 16c) gleitbeweglich befestigt sind.

## Revendications

1. Tapis roulant pour supporter et transporter des charges, comprenant :
- une structure de base stationnaire (12) ;
- un premier ensemble de lattes (16a), un deuxième ensemble de lattes (16b), et un troisième ensemble de lattes (16c), qui sont mobiles dans une direction longitudinale ;
- un dispositif d'actionnement (24) pour commander un mouvement pas à pas alternatif desdits ensembles de lattes (16a, 16b, 16c) selon un cycle de fonctionnement à quatre étapes, dans lequel, dans une première étape, les premier, deuxième et troisième ensembles de lattes (16a, 16b, 16c) se déplacent ensemble d'un pas (P) dans une première direction (A) et dans lequel, dans les deuxième, troisième, et quatrième étapes, un ensemble de lattes se déplace d'un pas (P) dans une seconde direction (B) opposée à la première direction (A) alors que les deux autres ensembles de lattes restent stationnaires,
**caractérisé en ce que** le dispositif d'actionnement (24) comprend un vilebrequin (32), qui peut tourner sur un axe (34) transversal par rapport à la direction de mouvement desdites lattes (16a, 16b, 16c) et est relié auxdits ensembles de lattes (16a, 16b, 16c) au moyen d'une pluralité de mécanismes de transmission à bielles et manivelles (36a, 36b, 36c, 42a, 42b, 42c), dans lequel chacun desdits mécanismes de transmission à bielles et manivelles (36a, 36b, 36c, 42a, 42b, 42c) est séparé de l'ensemble respectif de lattes (16a, 16b, 16c) pendant au moins une partie dudit cycle de fonctionnement.

2. Tapis roulant selon la revendication 1, **caractérisé en ce que** chacun desdits ensembles de lattes (16a, 16b, 16c) est fixé à un élément transversal mobile respectif (26a, 26b, 26c), lesdits éléments transversaux mobiles (26a, 26b, 26c) étant accouplés avec lesdits mécanismes de transmission à bielles et manivelles (36a, 36b, 36c, 42a, 42b, 42c) au moyen d'éléments respectifs (46a, 46c, 66b, 66c), qui peuvent coulisser dans une direction longitudinale et coopérer avec des bielles respectives (42a, 42b, 42c).

3. Tapis roulant selon la revendication 2, **caractérisé en ce qu'**au moins un desdits mécanismes de transmission à bielles et manivelles (36a, 36c, 42a, 42c) comprend une bielle (42a, 42c) comprenant une rainure oblongue (44a, 44c) dans laquelle une goupille (46a, 46c) fixée à un élément transversal mobile coulissant respectif (26a, 26b, 26c) peut coulisser.

4. Tapis roulant selon la revendication 2, **caractérisé en ce qu'**au moins un desdits mécanismes de transmission à bielles et manivelles (36b, 42b) est relié à un élément transversal mobile respectif (26b, 26c) au moyen d'un ensemble de transmission (54) comprenant deux tiges stationnaires (56b, 56c), montées de façon coulissante sur lesquelles, indépendamment l'une de l'autre, se trouvent deux douilles cylindriques (66b, 66c) fixées à des éléments transversaux mobiles respectifs (26b, 26c), lesdites douilles cylindriques (66b, 66c) coopérant avec deux éléments de poussée (58, 60), qui peuvent coulisser sur lesdites tiges (56b, 56c) et sont fixés à une bride (62) articulée sur ladite bielle (42b).

5. Tapis roulant selon la revendication 4, **caractérisé en ce qu'**il comprend un dispositif d'espacement (70) avec une longueur variable réglée entre un desdits éléments de poussée (58, 60) et lesdites douilles cylindriques (66b, 66c).

6. Tapis roulant selon la revendication 1, **caractérisé en ce que** la structure de base stationnaire susdite (12) comprend une pluralité de bandes de plaque métallique (18), placées parallèlement les unes aux autres dans une direction longitudinale et contenues dans des plans verticaux respectifs, lesdites bandes de plaque métallique supportant une pluralité de galets porteurs (22) avec un axe transversal, sur lesquels lesdites lattes (16a, 16b, 16c) sont montées de façon coulissante.
